# EUROPÄISCHE PATENTSCHRIFT

(11) **EP 1 034 022 B1**
(45) Veröffentlichungstag und Bekanntmachung des Hinweises auf die Patenterteilung: **27.03.2002**
(21) Anmeldenummer: 98948742.6
(22) Anmeldetag: 07.08.1998
(51) Int. Cl.: B01D 29/11, F02M 37/22

(54) **FLÜSSIGKEITSFILTER MIT EINGEBAUTEM DRUCKREGLER**
FILTER FOR FLUIDS WITH A BUILT-IN PRESSURE CONTROLLER
FILTRE POUR FLUIDE PRESENTANT UN REGULATEUR DE PRESSION INTEGRE

(30) Priorität: 06.12.1997 DE 19754243
(43) Veröffentlichungstag der Anmeldung: 13.09.2000
(73) Patentinhaber: ROBERT BOSCH GMBH, 70442 Stuttgart (DE)
(72) Erfinder: BUESER, Wolfgang, D-71691 Freiberg (DE); STROHL, Willi, D-71717 Beilstein (DE); SANCHEZ, Luis, Lozano, E-28022 Madrid (ES)
(86) Internationale Anmeldenummer: DE9802270
(87) Internationale Veröffentlichungsnummer: WO9929392

(56) Entgegenhaltungen:
- DE-A- 4 332 446
- DE-A- 4 430 471
- DE-U- 9 414 297
- US-A- 3 329 194
- US-A- 4 011 848
- US-A- 5 623 910

## Beschreibung

### Stand der Technik

Die Erfindung geht aus von einem Flüssigkeitsfilter mit eingebautem Druckregler für Kraftstoff nach der im Oberbegriff des Anspruchs 1 näher angegebenen Gattung.

Es ist schon ein solches Flüssigkeitsfilter mit eingebautem Druckregler für Kraftstoff aus der DE 44 30 471 A1 bekannt, bei der die sonst separaten Bauteile wie Filter und Druckregler in einer gemeinsamen Einheit zusammengefaßt sind. Bei diesem Flüssigkeitsfilter arbeitet der Druckregler mit einer Membran, welche von dem zu regelnden Druck am Ablaufanschluß gegen die Kraft einer Feder beaufschlagt ist. Der Druckregler liegt hier auf der Reinseite des Flüssigkeitsfilters, so daß seine Ventilfunktion nicht von Schmutzteilchen beeinträchtigt wird. Es kann nun in manchen Fällen von Nachteil sein, daß der Druckregler hier mit einer Membran arbeitet. Die im Durchmesser relativ große Membran führt zu einer relativ großen und aufwendigen Bauweise des Druckreglers, wobei auch das dichte Einspannen der Membran im Gehäuse eine relativ kostspielige Montage erfordert. Zudem ist die Membran hier zentral durchströmt, wodurch der Aufwand für den Druckregler ebenfalls erhöht wird.

Ferner ist aus der US-PS 4 011 848 ein Flüssigkeitsfilter mit eingebautem Druckregler bekannt, bei dem das Flüssigkeitsfilter im wesentlichen als Leitungsfilter ausgebildet ist, an dessen entgegengesetzt liegenden Stirnseiten des Gehäuses der Zulaufanschluß und der Ablaufanschluß angeordnet sind. Vom Gehäuse geht radial seitlich ein dritter Anschluß zum Tank ab, in dem als Druckregelventil ein einfaches, federbelastetes Kugelventil vorgesehen ist. Ferner ist dem Ablaufanschluß ein zusätzliches Sicherungsventil zugeordnet, das bei Ausfall der Kraftstoffversorgung die Verbindung zum Tank absperren soll. Obwohl hier der Druckregler bereits mit einem einfachen Kugelventil arbeitet, ist es von Nachteil, daß hier der Druckregler unmittelbar an die Schmutzseite angeschlossen ist. Der Druckregler, der hier ohne Membran arbeitet, ist infolge des einfachen Kugelventils relativ ungenau in seiner Arbeitsweise und vor allem schmutzanfällig. Ferner neigt ein derartiger Druckregler zu Schwingungen und damit zu unerwünschter Geräuschbildung. Der Druckregler liegt hier in ungünstiger Weise außerhalb des eigentlichen Flüssigkeitsfilters, dessen zueinander senkrechte Lage der Stutzen für den Ablaufanschluß und den Tankanschluß in vielen Einbaufällen sehr ungünstig ist.

### Vorteile der Erfindung

Das erfindungsgemäße Flüssigkeitsfilter mit dem eingebauten Druckregler für Kraftstoff mit den kennzeichnenden Merkmalen des Anspruchs 1 hat demgegenüber den Vorteil, daß bei dieser Ausbildung und Anordnung des Druckreglers im Flüssigkeitsfilter eine äußerst einfache, kompakte und kostengünstige Bauweise möglich wird, bei der zudem die Gefahr von Schwingungen und damit Geräuschbildung durch Druckpulsationen verringert wird und sich somit auch eine genauere Arbeitsweise des Druckreglers erzielen läßt. Der Druckregler läßt sich dabei in besonders günstiger Weise im Flüssigkeitsfilter integrieren.

Durch die in den Unteransprüchen aufgeführten Maßnahmen sind vorteilhafte Weiterbildungen und Verbesserungen des im Anspruch 1 angegebenen Flüssigkeitsfilters mit eingebautem Druckregler möglich. So läßt sich gemäß Anspruch 2 eine besondes wirksame Dämpfung von Schwingungen und damit Geräuschen bei kostengünstiger, einfacher Bauweise erreichen. Besonders vorteilhaft ist eine Ausbildung nach Anspruch 3, wodurch die Dämpfungseinrichtung raumsparend im Filterelement angeordnet werden kann und dadurch ein besonders kompakt bauender Flüssigkeitsfilter möglich wird. Weitere zweckmäßige Ausgestaltungen ergeben sich aus den übrigen Ansprüchen 4 bis 13, welche eine einfache und kompakte Bauweise besonders unterstützen und eine erleichterte Herstellung und Montage des Flüssigkeitsfilters erlauben. Zweckmäßig ist es, wenn dabei der Druckregler eine vormontierbare Montagegruppe bildet, die relativ einfach am Deckel des Filtergehäuses befestigt werden kann. Auch die Druckeinstellung läßt sich dabei an dieser Montagegruppe leicht vornehmen. Äußerst günstig ist ferner einer Ausbildung nach den Ansprüchen 14 bis 16, wodurch die Integration des Druckreglers im Filterelement noch verbessert werden kann, so daß praktisch die ursprüngliche Filtergröße erhalten bleibt, zudem erlaubt dabei das Filterelement durch seine symmetrische Bauweise einen ungerichteten Einbau im Gehäuse. Weitere vorteilhafte Ausgestaltungen ergeben sich aus der Beschreibung und der Zeichnung.

### Zeichnung

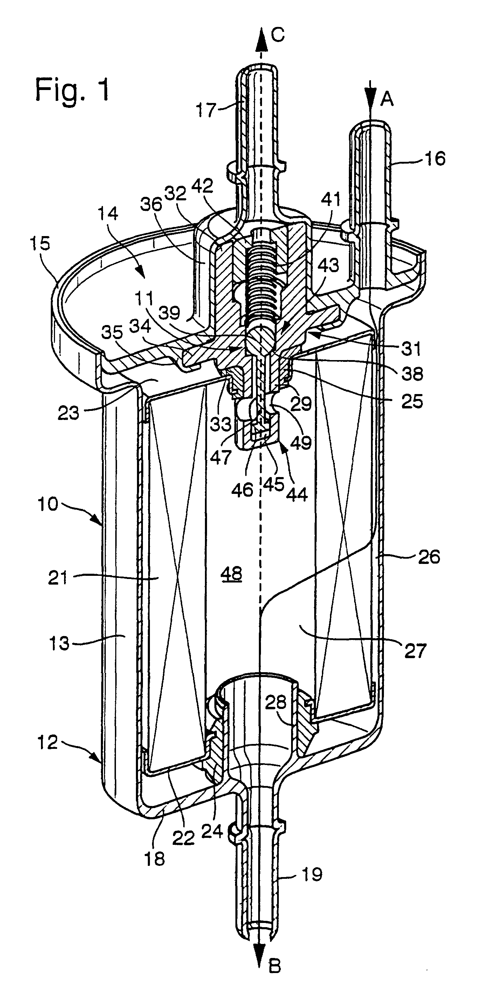

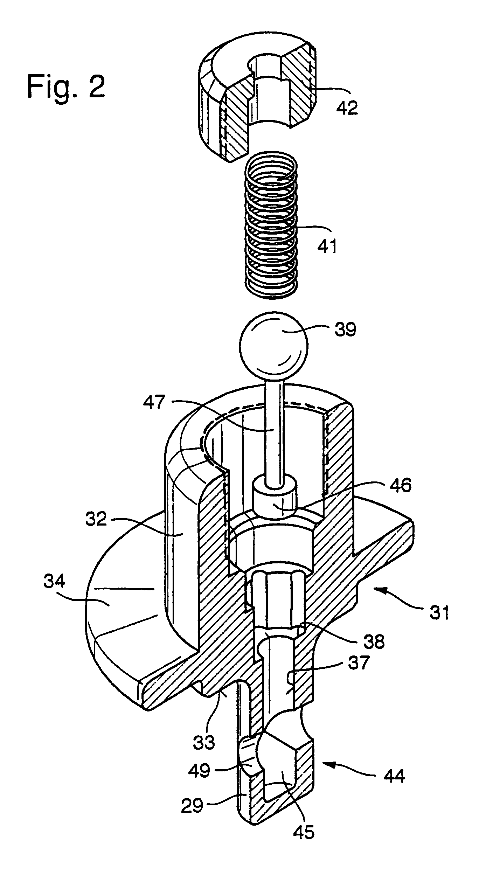

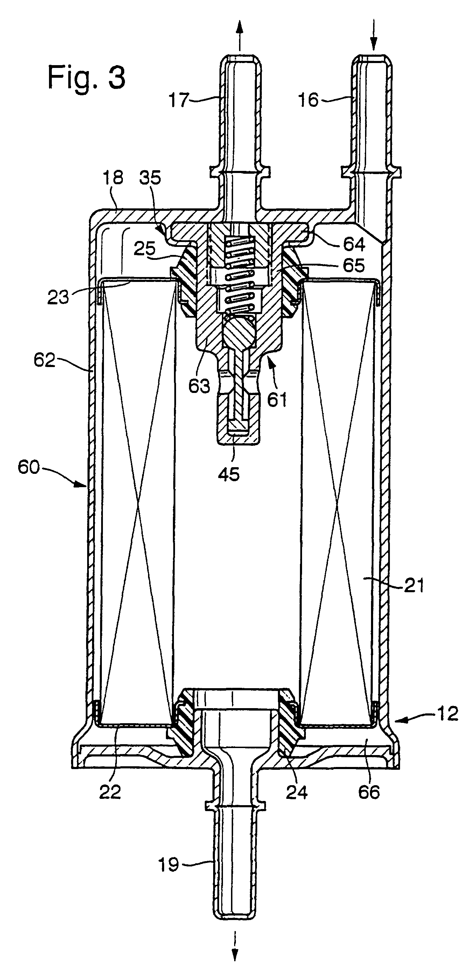

Zwei Ausführungsbeispiele der Erfindung sind in der Zeichnung dargestellt und in der nachfolgenden Beschreibung näher erläutert. Es zeigen die Figur 1 einen Längsschnitt durch ein Ausführungsbeispiel eines Flüssigkeitsfilters mit eingebautem Druckregler für Kraftstoff in vereinfachter, perspektivischer Darstellung und Figur 2 den Druckregler nach Figur 1 in vergrößertem Maßstab in einer Explosiv-Darstellung und im Längsschnitt; Fig. 3 zeigt einen Längsschnitt durch ein zweites Ausführungsbeispiel.

### Beschreibung des Ausführungsbeispiels

Die Figur 1 zeigt ein Flüssigkeitsfilter 10 mit eingebautem Druckregler 11 für Kraftstoffe in einer längsgeschnittenen, perspektivischen Darstellung, wobei das Flüssigkeitsfilter 10 im wesentlichen als Leitungsfilter ausgeführt ist und der Druckregler 11 deckelseitig integriert ist.

Das Flüssigkeitsfilter 10 weist ein Gehäuse 12 aus Aluminium auf, das im wesentlichen aus einem becherförmigen Gehäuseteil 13 und einem zugehörigen Deckel 14 besteht. Die beiden Gehäuseteile 13, 14 sind an ihrem äußeren Rand 15 miteinander dicht und fest verbunden, insbesondere verschweißt. An dem Deckel 14 ist ein Zulaufanschluß 16 ausgebildet, über den vom Tank kommender Kraftstoff dem Flüssigkeitsfilter 10 zugeführt wird. Ferner ist am Deckel 14 ein Tankanschluß 17 ausgebildet, über den beim Ansprechen des Druckreglers 11 Kraftstoff zum Tank abfließen kann. Am becherförmigen Gehäuseteil 13 ist an dessen Boden 18 ein Ablaufanschluß 19 vorgesehen, über den gereinigter Kraftstoff das Flüssigkeitsfilter 10 verläßt und in Richtung Einspritzventile geführt wird. Der Tankanschluß 17 und der Ablaufanschluß 19 liegen koaxial zueinander in der Längsachse des Flüssigkeitsfilters 10, während der dazu achsparallele Zulaufanschluß 16 am Deckel 14 radial nach außen versetzt ist und an dessem äußeren Rand liegt. Alle Anschlüsse 16, 17, 19 sind als Rohrstutzen für Schlauchanschluß ausgebildet.

Im Inneren des Gehäuses 12 ist zwischen den Zulaufanschluß 16 und den Ablaufanschluß 19 ein Filterelement 21 geschaltet, das hier als ein an sich bekannter, radial von außen nach innen duchströmter Sterneinsatz ausgebildet ist. Das Filterelement 21 ist an seinen stirnseitigen Endkappen 22, 23 jeweils mit ringförmigen Formdichtungen 24, 25 ausgebildet, mit deren Hilfe eine Abdichtung zwischen der mit dem Zulaufanschluß 16 verbundenen Schmutzseite 26 und der mit dem Ablaufanschluß 19 verbundenen Reinseite 27 hergestellt wird. Zu diesem Zweck ist am Boden 18 des becherförmigen Gehäuseteils 13 ein nach innen ragender Rohrstutzen 28 ausgebildet, auf dem das Filterelement 21 mit seiner Formdichtung 24 gehaltert ist und dabei für eine Abdichtung sorgt. Mit der anderen Formdichtung 25 sitzt das Filterelement 21 auf einem hohlzylindrischen Abschnitt 29 eines Ventilgehäuses 31, das zugleich ein Teil des Druckreglers 11 bildet.

Der im Flüssigkeitsfilter 10 integrierte Druckregler 11 hat ein einstückiges Ventilgehäuse 31, das im wesentlichen hülsenförmig aufgebaut ist. Dieses Ventilgehäuse 31 weist einen äußeren, buchsenförmigen Abschnitt 32 mit größerem Durchmesser auf, der in den inneren, hohlzylindrischen Abschnitt 29 mit kleinerem Durchmesser übergeht. Am Übergang der beiden Abschnitte 29, 32 ist eine Schulter 33 ausgebildet, an welcher der Formdichtring 25 anliegt. Am Außenumfang des äußeren Abschnitts 32 liegt nahe der Schulter 33 ein Ringflansch 34, mit welchem das Ventilgehäuse 31 an der Innenseite des Deckels 14 in einer kreisförmig verlaufenden Einspannstelle 35 dicht befestigt ist. Diese Einspannstelle 35 ist vorzugsweise als Bördelstelle ausgebildet. Das Ventilgehäuse 31 ragt mit seinem äußeren, buchsenförmigen Abschnitt 32 in eine domförmige, zentrale Ausformung 36 des Deckels 14 hinein, welche Ausformung 36 in einem Schlauchanschlußstutzen für den Tankanschluß 17 ausläuft. Das hülsenförmige Ventilgehäuse 31 weist in seinem Inneren eine im Durchmesser mehrfach abgesetzte, zentrisch angeordnete Sacklochbohrung 37 auf, die zum äußeren Abschnitt 32 hin offen ist. In dieser Sacklochbohrung 37 liegt etwa in Höhe des Ringflansches 34 ein Ventilsitz 38, dem ein Sitzventilkörper 39 in Form einer Kugel zugeordnet ist. Der Sitzventilkörper 39 wird von einer Feder 41 gegen seinen Ventilsitz 38 gedrückt, wobei sich die Feder 41 ihrerseits an einer in der Sacklochbohrung 37 angeordneten hohlen Justierschraube 42 abstützt. Ventilsitz 38 und Sitzventilkörper 39 sind somit Teile eines Ventils 43 des Druckreglers 11, dessen Ansprechdruck mit Hilfe der Justierschraube 42 einstellbar ist.

Wie die Figur 1 in Verbindung mit Figur 2, welche einen längsgeschnittenen Druckregler 11 nach Figur 1 in einer Explosivdarstellung in vergrößertem Maßstab zeigt, näher darstellt, ist dem Ventil 43 des Druckreglers 11 eine Dämpfungseinrichtung 44 zugeordnet. Für diese Dämpfungseinrichtung 44 bildet die Sacklochbohrung 37 an ihrem inneren Ende im Bereich des inneren Abschnitts 29 einen Dämpfungsraum 45, in dem ein Dämpfungskolben 46 mit ausreichend großem radialen Spiel gleitend geführt ist. Der Dämpfungskolben 46 steht über einen Stößel 47 mit dem kugeligen Sitzventilkörper 39 in Wirkverbindung. Es kann nun vorteilhaft sein, den Sitzventilkörper 39 mit dem Stößel 47 und dem Dämpfungskolben 46 zusammen einstückig auszubilden. Wie die Figur 1 deutlich zeigt, ragt das Ventilgehäuse 31 mit seinem inneren Abschnitt 29 durch die Formdichtung 25 hindurch in den der Reinseite 27 zugeordneten Innenraum 48 des Filterelements 21 hinein. An diesem inneren Abschnitt 29 sind innerhalb des Innenraums 48 und neben der Formdichtung 25 liegende radiale Öffnungen 49 angeordnet, über welche der Innenraum 48 mit der Sacklochbohrung 37 im Bereich zwischen Dämpfungskolben 46 und Ventilsitz 38 verbunden ist. Die Dämpfungseinrichtung 44 für das Ventil 43 des Druckreglers 11 liegt somit innerhalb des Filterelements 21, so daß sie keinen zusätzlichen Bauraum erfordert. Durch den ohnedies klein bauenden Druckregler mit Sitzventil 43 und Dämpfungseinrichtung 44 läßt sich trotz der Integration des Druckreglers 11 im Flüssigkeitsfilter 10 eine äußerst kompakte Bauweise erreichen.

Die Wirkungsweise des Flüssigkeitsfilters 10 mit integriertem Druckregler 11 wird wie folgt erläutert:

Der in der Regel von einem Tank kommende Kraftstoff wird dem Flüssigkeitsfilter 10 über den Zulaufanschluß 16 zugeführt und gelangt im Inneren des Gehäuses 12 auf dessen Schmutzseite 26. Der Kraftstoff durchströmt radial von außen nach innen das Filterelement 21 und gelangt gereinigt auf die Reinseite 27, und strömt von dort zumindest teilweise über den Ablaufanschluß 19 in Richtung der Verbraucher, die in vorliegendem Fall Einspritzventile sind. Der auf der Reinseite 27 herrschende Druck wirkt über die radialen Öffnungen 49 auch in dem stromaufwärts vom Ventilsitz 38 liegenden Teil der Sacklochbohrung 37 und beaufschlagt den Sitzventilkörper 39, der in Gegenrichtung von der Feder 41 belastet ist. Über die Feder 41 wird dabei ein bestimmter Druck voreingestellt. Wird dieser voreingestellte Druck im Druckregler 11 überschritten, so öffnet das Ventil 43 und Kraftstoff kann von der Reinseite 27 und damit dem Innenraum 48 über die radialen Öffnungen 49, das geöffnete Ventil 43, durch die Feder 41 und die hohle Justierschraube 42 hindurch zum Tankanschluß 17 abströmen. Durch die Dämpfungseinrichtung 44 wird dabei eine genauere Arbeitsweise des Ventils 43 erreicht und zudem ergibt sich eine wesentliche Schwingungsdämpfung, die auch zu geringeren Geräuschen führt. Da der Druckregler 11 mit seiner Dämpfungseinrichtung 44 nur noch von der Reinseite 27 her mit Druckmittel beaufschlagt wird, werden alle seine Bauteile nur von gereinigtem Kraftstoff durchflossen und somit Verschleiß oder Undichtigkeiten oder Funktionsstörungen in der Dämpfungseinrichtung aufgrund von Schmutzpartikeln ausgeschlossen. Der Deckel 14 bildet mit dem integrierten Druckregler 11 einschließlich seiner Dämpfungseinrichtung 44 eine vormontierbare Montagegruppe, die leicht handhabbar und montierbar ist und bei der auch der Druckregler 11 mit Hilfe der Justierschraube 42 leicht einstellbar ist. Die aufgezeigte Integration des Druckreglers 11 in Sitzventilausführung und mit Dämpfungseinrichtung 44 im Flüssigkeitsfilter 10 ermöglicht neben einer genauen Druckregelung auch einen schwingungsarmen und dadurch geräuscharmen Betrieb, wobei der klein bauende Druckregler eine besonders kompakte Bauweise des Flüssigkeitsfilters 10 unterstützt.

Die Fig. 3 zeigt einen Längsschnitt durch ein zweites Flüssigkeitsfilter 60, das sich von dem Flüssigkeitsfilter 10 nach Figur 1 vor allem dadurch unterscheidet, daß der Druckregler 61 mit dem Zulaufanschluß 16 und dem Tankanschluß 17 vertauscht im Gehäuse 12 angeordnet sind; im übrigen sind gleiche Bauelemente wie in Figur 1 mit gleichen Bezugszeichen versehen.

Das zweite Flüssigkeitsfilter 60 hat dazu ein becherförmiges Gehäuseteil 62, an dessen Boden 18 außen der Tankanschluß 17 und der Zulaufanschluß 16 liegen, während an seiner Innenseite der Druckregler 61 angeordnet ist, dessen Ventilgehäuse 63 an seinem Ringflansch 64 in der Einspannstelle 35 dicht befestigt ist. Der Ringflansch 64 liegt nun am äußeren, vom Dämpfungsraum 45 abgewandten Ende des Ventilgehäuses 63 und bildet einen ebenen Flansch, so daß das Ventilgehäuse 63 am ebenen Boden 18 des Gehäuseteils 62 befestigbar ist. Auf dem an den Ringflansch 64 anschließenden buchsenförmigen Abschnitt 65 des Ventilgehäuses 63 ist nun das Filterelement 21 mit seiner Formdichtung 25 geführt und dicht abgestützt, so daß der Druckregler 61 noch stärker in das patronenförmige Filterelement 21 integriert ist und somit die Länge des Filterelements 21 das bestimmende Maß für die Baugröße des Filters ist.

Das Gehäuseteil 62 ist durch einen Deckel 66 verschlossen, der nun den Ablaufanschluß 19 trägt und an den innen das Filterelement 21 über die andere Formdichtung 24 gelagert und dicht abgestütztist. Das zweite Flüssigkeitsfilter 60 hat gegenüber demjenigen nach Figur 1 den Vorteil, daß es durch bessere Raumausnutzung bei der Bauweise des Druckreglers 61 noch kompakter baut; zudem sind auch die Formdichtungen 24, 25 an den Endkappen 22, 23 von gleicher Größe, so daß das Filterelement symmetrisch baut und in beiden Richtungen in das Geäuseteil 62 einsetzbar ist. Die Wirkungsweise des zweiten Flüssigkeitsfilters 60 entspricht derjenigen des ersten Flüssigkeitsfilters 10.

Selbstverständlich sind an dem gezeigten Flüssigkeitsfilter Änderungen möglich, ohne vom Gedanken der Erfindung abzuweichen. So kann bei Bedarf im Druckregler 11 die Ventilkugel auch als gesondertes Bauelement ausgeführt werden; auch lassen sich Stößel und Dämpfungskolben bei entsprechender Ausgestaltung voneinander trennen. Auch läßt sich die Anordnung der Feder 41 im Druckregler 11 variieren.

Anstelle der Ventilkugel kann auch ein anderer Sitzventilkörper verwendet werden. Auch ist es möglich, anstelle des gezeigten Stößels und Dämpfungskolbens ein gemeinsames, stabförmiges Dämpfungselement zu verwenden.

Selbstverständlich lassen sich auch am Ventilgehäuse Änderungen vornehmen, ohne vom Gedanken der Erfindung abzuweichen.

## Patentansprüche

1. Flüssigkeitsfilter mit eingebautem Druckregler (11, 61) für Kraftstoff und mit einem Gehäuse (12), in dem ein Filterelement (21) angeordnet ist, das zwischen einen mit einer Schmutzseite verbundenen Zulaufanschluß (16) und einen mit der Reinseite des Filters verbundenen Ablaufanschluß (19) geschaltet ist, wobei an dem Gehäuse (12) neben dem Zulauf- (16) und Ablaufanschluß (19) ein Tankanschluß (17) ausgebildet ist, über welchen beim Ansprechen des Druckreglers (11, 16) über dessen Ventil (43) strömende Flüssigkeit von der Reinseite zum Tank abströmt, und bei dem das Ventil (43) des Druckreglers (11, 61) einen von einer Feder (41) belasteten Sitzventilkörper (39) aufweist, **dadurch gekennzeichnet, daß** dem Sitzventilkörper (39) des Druckreglers (11, 61) eine hydraulisch arbeitende Dämpfungseinrichtung (44) zugeordnet ist.

2. Flüssigkeitsfilter nach Anspruch 1, **dadurch gekennzeichnet, daß** die Dämpfungseinrichtung (44) einen in einem Dämpfungsraum (45) angeordneten Dämpfungskolben (46) aufweist, der mit dem Sitzventilkörper (39) in Wirkverbindung steht.

3. Flüssigkeitsfilter nach Anspruch 1 oder 2, **dadurch gekennzeichnet, daß** die Dämpfungseinrichtung (44) im wesentlichen in dem der Reinseite (27) zugeordneten Innenraum (48) des Filterelements (21) angeordnet ist.

4. Flüssigkeitsfilter nach einem der Ansprüche 2 bis 3, **dadurch gekennzeichnet, daß** der Druckregler (11, 61) ein im wesentlichen hülsenförmiges, einen Ventilsitz (38) aufnehmendes Ventilgehäuse (31, 63) aufweist, in dem koaxial zueinander der Dämpfungskolben (46), der Sitzventilkörper (39), die Feder (41) und insbesondere ein Justierelement (42) zur Federeinstellung angeordnet sind.

5. Flüssigkeitsfilter nach Anspruch 4, **dadurch gekennzeichnet, daß** das Ventilgehäuse (31, 63) eine mehrfach abgesetzte Sacklochbohrung (37) aufweist, die an ihrem inneren Ende den Dämpfungsraum (45) mit dem Dämpfungskolben (46) und davon im Abstand den Ventilsitz (38) aufweist und daß die Sacklochbohrung (37) im Bereich zwischen Dämpfungsraum (45) und Ventilsitz (38) über radiale Öffnungen (49) im Ventilgehäuse (31, 63) mit dem Innenraum (48) im Filterelement (21) verbunden ist.

6. Flüssigkeitsfilter nach einem der Ansprüche 2 bis 5, **dadurch gekennzeichnet, daß** der Dämpfungskolben (46) über einen Stößel (47) mit dem Ventilkörper (39) in Wirkverbindung steht, wobei insbesondere Dämpfungskolben, Stößel und Ventilkörper zusammen einstückig ausgebildet sind.

7. Flüssigkeitsfilter nach einem der Ansprüche 1 bis 6, **dadurch gekennzeichnet, daß** der Sitzventilkörper (39) kugelförmig ausgebildet ist.

8. Flüssigkeitsfilter nach einem der Ansprüche 2 bis 7, **dadurch gekennzeichnet, daß** der Dämpfungskolben (46) einerseits und die Feder (41) andererseits auf entgegengesetzten Seiten des Sitzventilkörpers (39) angeordnet sind.

9. Flüssigkeitsfilter nach einem der Ansprüche 4 bis 8, **dadurch gekennzeichnet, daß** das Ventilgehäuse (31) außen einen Ringflansch (34) aufweist, mit dem es im Deckel (14) des Gehäuses (12) befestigt ist.

10. Flüssigkeitsfilter nach Anspruch 9, **dadurch gekennzeichnet, daß** das Ventilgehäuse (31) angrenzend an den Ringflansch (34) einen buchsenförmigen Abschnitt (32) mit größerem Durchmesser aufweist, der in einen hülsenförmigen Abschnitt (29) mit kleinerem Durchmesser übergeht, mit welchem Abschnitt (32) mit größerem Durchmesser das Ventilgehäuse (31) in eine domförmige, zentrale Ausformung (36) des Deckels (14) ragt, welche Ausformung (36) in einem Anschlußstutzen für den Tankanschluß (17) ausläuft.

11. Flüssigkeitsfilter nach Anspruch 10, **dadurch gekennzeichnet, daß** das Ventilgehäuse (31) angrenzend an den Ringflansch (34) den hohlzylindrischen, hülsenförmigen Abschnitt (29) aufweist, an dem die radialen Öffnungen (49) angeordnet sind und auf dem eine Endkappe (23) des Filterelements (21) über eine ringförmige Formdichtung (25) dicht abgestützt ist.

12. Flüssigkeitsfilter nach einem der Ansprüche 1 bis 11, **dadurch gekennzeichnet, daß** das Gehäuse (12) aus einem becherförmigen Gehäuseteil (13) und einem daran befestigten Deckel (14) besteht, von denen der Deckel (14) den zentrisch angeordneten Tankanschluß (17) und radial dazu versetzt den Zulaufanschluß (16) aufweist.

13. Flüssigkeitsfilter nach einem der Ansprüche 9 bis 12, **dadurch gekennzeichnet, daß** im Ventilgehäuse (31) der Ventilsitz (38) etwa in der gleichen radialen Ebene wie der Ringflansch (34) liegt.

14. Flüssigkeitsfilter nach einem der Ansprüche 4 bis 8, **dadurch gekennzeichnet, daß** das Ventilgehäuse (63) an seinem einen Ende außen einen Ringflansch (64) aufweist, mit dem es am Boden (18) des becherförmigen Gehäuseteils (62) befestigt ist, an dem der Zulaufanschluß (16) und der Tankanschluß (17) angeordnet sind.

15. Flüssigkeitsfilter nach Anspruch 14, **dadurch gekennzeichnet, daß** das Ventilgehäuse (63) auf der vom Boden (18) abgewandten Seite des Ringflansches (64) einen buchsenförmigen Abschnitt (65) aufweist, auf dem eine Endkappe (23) des Filterelements (21) über eine ringförmige Formdichtung (25) dicht abgestützt ist.

16. Flüssigkeitsfilter nach Anspruch 14 oder 15, **dadurch gekennzeichnet, daß** zum ungerichteten Einbau des Filterelements (21) im Gehäuse (12) beide Formdichtungen (24, 25) gleiche Innendurchmesser aufweisen.

## Claims

1. Liquid filter with built-in pressure controller (11, 61) for fuel and with a housing (12), in which a filter element (21), which is connected between an inlet connection (16), which is connected to a dirty side, and an outlet connection (19), which is connected to the clean side of the filter, is arranged, a tank connection (17) being formed on the housing (12) as well as the inlet connection (16) and the outlet connection (19), via which tank connection, when the pressure controller (11, 61) responds, liquid which flows via its valve (43) flows out from the clean side to the tank, and in which the valve (43) of the pressure controller (11, 61) has a seat valve body (39), which is under load from a spring (41), **characterized in that** a hydraulically operating damping device (44) is assigned to the seat valve body (39) of the pressure controller (11, 61).

2. Liquid filter according to Claim 1, **characterized in that** the damping device (44) has a damping piston (46) which is arranged in a damping space (45) and is operatively connected to the seat valve body (39).

3. Liquid filter according to Claim 1 or 2, **characterized in that** the damping device (44) is substantially arranged in the inner space (48) of the filter element (21) which is assigned to the clean side (27).

4. Liquid filter according to one of Claims 2 to 3, **characterized in that** the pressure controller (11, 61) has a substantially sleeve-like valve housing (31, 63) which accommodates a valve seat (38) and in which the damping piston (46), the seat valve body (39), the spring (41) and, in particular, an adjustment element (42) for spring adjustment are arranged coaxially with respect to one another.

5. Liquid filter according to Claim 4, **characterized in that** the valve housing (31, 63) has a multiply stepped blind bore (37) which, at its inner end, has the damping space (45) with the damping piston (46) and, at a distance therefrom, the valve seat (38), and **in that** the blind bore (37), in the region between damping space (45) and valve seat (38), is connected, via radial openings (49) in the valve housing (31, 63), to the inner space (48) in the filter element (21).

6. Liquid filter according to one of Claims 2 to 5, **characterized in that** the damping piston (46) is operatively connected, via a ram (47), to the valve body (39), in particular the damping piston, the ram and the valve body being formed integrally with one another.

7. Liquid filter according to one of Claims 1 to 6, **characterized in that** the seat valve body (39) is designed in the form of a ball.

8. Liquid filter according to one of Claims 2 to 7, **characterized in that** the damping piston (46), on the one hand, and the spring (41), on the other hand, are arranged on opposite sides of the seat valve body (39).

9. Liquid filter according to one of Claims 4 to 8, **characterized in that**, on the outside, the valve housing (31) has an annular flange (34), by means of which it is secured in the cover (14) of the housing (12).

10. Liquid filter according to Claim 9, **characterized in that** the valve housing (31), adjacent to the annular flange (34), has a bush-like section (32) of relatively large diameter, which merges into a sleeve-like section (29) of smaller diameter, by means of which section (32) of relatively large diameter the valve housing (31) projects into a dome-like, central shaped-out portion (36) of the cover (14), which shaped-out portion (36) ends by merging into a connection piece for the tank connection (17).

11. Liquid filter according to Claim 10, **characterized in that** the valve housing (31), adjacent to the annular flange (34), has the hollow-cylindrical, sleeve-like section (29), at which the radial openings (49) are arranged and on which an end cap (23) of the filter element (21) is supported in a sealed manner via an annular shaped seal (25).

12. Liquid filter according to one of Claims 1 to 11, **characterized in that** the housing (12) comprises a cup-like housing part (13) and a cover (14) which is attached thereto, of which the cover (14) has the centrally arranged tank connection (17) and the inlet connection (16) arranged radially offset with respect thereto.

13. Liquid filter according to one of Claims 9 to 12, **characterized in that** in the valve housing (31) the valve seat (38) lies in approximately the same radial plane as the annular flange (34).

14. Liquid filter according to one of Claims 4 to 8, **characterized in that** the valve housing (63), on the outside of one end, has an annular flange (64), by means of which it is attached to the base (18) of the cup-like housing part (62), on which the inlet connection (16) and the tank connection (17) are arranged.

15. Liquid filter according to Claim 14, **characterized in that** the valve housing (63), on that side of the annular flange (64) which is remote from the base (18), has a sleeve-like section (65), on which an end cap (23) of the filter element (21) is supported in a sealed manner via an annular shaped seal (25).

16. Liquid filter according to Claim 14 or 15, **characterized in that**, for unoriented installation of the filter element (21) in the housing (12), both shaped seals (24, 25) have the same internal diameter.

## Revendications

1. Filtre à liquide intégrant un régulateur de pression (61) pour du carburant et comprenant un boîtier (12) recevant un élément de filtre (21) entre un ajutage d'alimentation (16) relié au côté non filtré et un ajutage de refoulement (19) relié au côté filtré du filtre,
le boîtier (12) comportant en plus de l'ajutage d'alimentation (16) et de l'ajutage de refoulement (19), un ajutage ou branchement de réservoir (17) par lequel, lorsque le régulateur de pression (11, 16) est sollicité, du liquide peut traverser sa soupape (43) pour passer du côté filtré dans le réservoir et la soupape (43) du régulateur de pression (11, 61) comporte un organe d'obturation (39) chargé par un ressort (41) contre son siège,
**caractérisé en ce que**
l'organe d'obturation (39) du régulateur de pression (11, 61) comporte une installation d'amortissement (44) hydraulique.

2. Filtre à liquide selon la revendication 1,
**caractérisé en ce que**
l'installation d'amortissement (44) comporte un piston amortisseur (46) placé dans une chambre d'amortissement (45) et ce piston coopère avec l'organe d'obturation de soupape (39).

3. Filtre à liquide selon la revendication 1 ou 2,
**caractérisé en ce que**
l'installation d'amortissement (44) est prévue principalement dans la chambre intérieure (48) de l'élément de filtre (21) associé au côté du liquide filtré (27).

4. Filtre à liquide selon l'une des revendications 2 et 3,
**caractérisé en ce que**
le régulateur de pression (11, 61) comporte un boîtier de soupape (31, 63) essentiellement en forme de manchon recevant un siège de soupape (38) et dans lequel se trouvent, coaxialement, le piston d'amortissement (46), l'organe d'obturation (39), le ressort (41) et notamment un élément d'ajustage (42) pour le réglage du ressort.

5. Filtre à liquide selon la revendication 4,
**caractérisé en ce que**
le boîtier de soupape (31, 63) comporte un perçage borgne (37) à plusieurs épaulements dont l'extrémité intérieure comporte une chambre d'amortissement (45) avec le piston d'amortissement (46) et à une distance de celui-ci, le siège de soupape (38) et,
le perçage borgne (37) est relié dans la zone comprise entre la chambre d'amortissement (45) et le siège de soupape (38), par des ouvertures radiales (49) prévues dans le boîtier de soupape (31, 63) avec le volume intérieur (48) de l'élément de filtre (21).

6. Filtre à liquide selon l'une quelconque des revendications 2 à 5,
**caractérisé en ce que**
le piston d'amortissement (46) coopère par un poussoir (47) à l'organe d'obturation (39) et en particulier le piston amortisseur, le poussoir et l'organe d'obturation sont réalisés en une seule pièce.

7. Filtre à liquide selon l'une quelconque des revendications 1 à 6,
**caractérisé en ce que**
l'organe d'obturation (39) est en forme de bille.

8. Filtre à liquide selon l'une quelconque des revendications 1 à 7,
**caractérisé en ce que**
le piston amortisseur (46) est prévu d'un côté et le ressort (41) de l'autre côté par rapport au côté opposé de l'organe d'obturation (39).

9. Filtre à liquide selon l'une quelconque des revendications 4 à 8,
**caractérisé en ce que**
le boîtier de soupape (31) comporte extérieurement une bride annulaire (34) par laquelle il est fixé au couvercle (14) du boîtier (12).

10. Filtre à liquide selon la revendication 9,
**caractérisé en ce que**
le boîtier de soupape (31) comporte de manière adjacente à la bride annulaire (34), un segment (32) en forme de manchon de plus grand diamètre, qui rejoint un segment (29) en forme de manchon de plus petit diamètre, et par le segment (32) de grand diamètre, le boîtier de soupape (31) pénètre dans une déformation centrale en forme de dôme (36) du couvercle (14), cette déformation (36) se terminant par un ajutage (17) de branchement du réservoir.

11. Filtre à liquide selon la revendication 10,
**caractérisé en ce que**
le boîtier de soupape (31) comporte de manière adjacente à la bride annulaire (34), un segment (29) en forme de manchon cylindrique creux, muni d'orifices radiaux (49) et il s'appuie de manière étanche sur un capuchon d'extrémité (23) de l'élément de filtre (21) par un joint moulé (25) annulaire.

12. Filtre à liquide selon l'une quelconque des revendications 1 à 11,
**caractérisé en ce que**
le boîtier (12) est formé d'une partie (13) en gobelet à laquelle est fixé un couvercle (14) comportant en position centrale, l'ajutage de réservoir (17) et de manière décalée radialement, l'ajutage d'alimentation (16).

13. Filtre à liquide selon l'une quelconque des revendications 9 à 12,
**caractérisé en ce que**
dans le boîtier de soupape (31), le siège de soupape (38) se situe sensiblement dans le même plan radial que la bride annulaire (34).

14. Filtre à liquide selon l'une quelconque des revendications 4 à 8,
**caractérisé en ce qu'**
à son extrémité extérieure, le boîtier de soupape (63) comporte une bride annulaire (64) par laquelle il est fixé au fond (18) de la partie de boîtier (62) en forme de gobelet, munie de l'ajutage d'alimentation (16) et de l'ajutage de réservoir (17).

15. Filtre à liquide selon la revendication 14,
**caractérisé en ce que**
le boîtier de soupape (63) comporte sur le côté de la bride annulaire (64) à l'opposé du fond (18), un segment (65) en forme de manchon sur lequel s'appuie de manière étanche un capuchon d'extrémité (23) de l'élément de filtre (21) par l'intermédiaire d'un joint moulé (25) annulaire.

16. Filtre à liquide selon la revendication 14 ou 15,
**caractérisé en ce que**
les deux joints moulés (24, 25) ont le même diamètre intérieur pour le montage non orienté de l'élément de filtre (21) dans le boîtier (12).
